(19)

**Europäisches Patentamt**
**European Patent Office**
**Office européen des brevets**

(11) **EP 2 382 425 B1**

(12) **EUROPEAN PATENT SPECIFICATION**

(45) Date of publication and mention
of the grant of the patent:
**28.08.2013 Bulletin 2013/35**

(51) Int Cl.:
***F24F 12/00*** *(2006.01)*

(21) Application number: **10728442.4**

(86) International application number:
**PCT/SE2010/000016**

(22) Date of filing: **25.01.2010**

(87) International publication number:
**WO 2010/085197 (29.07.2010 Gazette 2010/30)**

(54) **LOW PROFILED AIR HANDLING UNIT WITH TILTED ROTARY HEAT EXCHANGE**

NIEDRIGPROFILIERTES KLIMAGERÄT MIT GENEIGTEM DREHWÄRMETAUSCHER

UNITÉ DE TRAITEMENT DE L'AIR À PROFIL BAS AVEC ÉCHANGEUR DE CHALEUR TOURNANT INCLINÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.01.2009 SE 0950026**
**23.01.2009 SE 0950025**
**26.08.2009 SE 0901124**

(43) Date of publication of application:
**02.11.2011 Bulletin 2011/44**

(73) Proprietor: **Swegon AB**
**535 23 Kvänum (SE)**

(72) Inventors:
• **LAWRENSON, Andrew**
**S-541 44 Skövde (SE)**

• **BERG, Gunnar**
**S-521 30 Falköping (SE)**
• **CARLSSON, Claes**
**S-534 92 Tråvad (SE)**
• **FRANSSON, Martin**
**S-531 35 Lidköping (SE)**
• **ALL, Leif**
**S-534 61 Vedum (SR)**

(74) Representative: **Valea AB**
**Lindholmspiren 5**
**417 56 Göteborg (SE)**

(56) References cited:
**EP-A1- 1 536 188        EP-B1- 1 029 202**
**JP-A- 2005 009 727     JP-A- 2005 042 955**
**US-A- 3 748 997          US-A- 4 727 931**
**US-A- 5 826 641          US-A1- 2006 005 560**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to ventilation and air conditioning of commercial, industrial and private buildings, in particular to adapted air handling units comprising a heat exchanger for ventilation suitable for installation in confined spaces within a building.

BACKGROUND TO THE INVENTION

Air handling units (AHU) are used to provide ventilation in buildings. So that the energy in the air being replaced is not lost, AHUs have a heat recovery exchanger to transfer the energy from the extracted air and pass it back into the supply air. Traditionally larger commercial buildings have a central AHU supplying the ventilation. The use of a central AHU and large sized ducts passing to all ventilated areas is, however, space consuming and can restrict the design freedom of engineers and/or architects planning the ventilation system/ building design. There is currently an increasing trend to move away from centralised ventilation to decentralised ventilation which gives the benefits that; individual decentralised zones have more freedom to control their own ventilated environments, valuable floor space is freed up when the units are located in unused space (such as a ceiling void) and there is more flexibility in the ventilation installation.

The focus of the present invention is to provide an AHU specifically designed to have a low profile for use in tight spaces with the minimum noise levels so that the unit can be used in close proximity to occupied spaces and to provide an energy efficient solution comparable to that available for commercial centralised ventilation solutions.

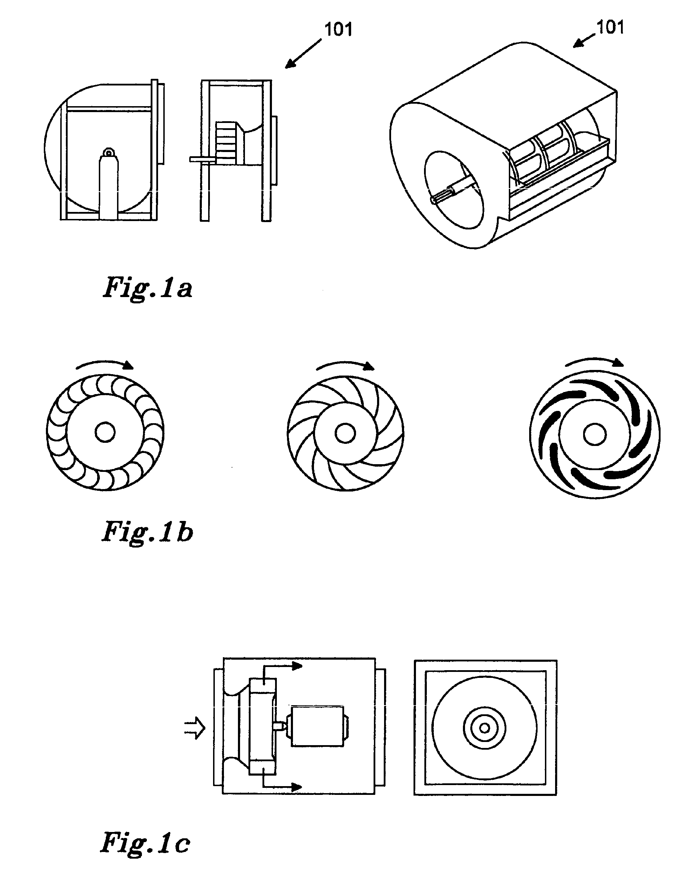

The typical design solution for smaller low profile AHUs suitable for installation in a ceiling void is to use a crossflow heat exchanger for heat recovery and housed forward curved centrifugal fans, fig 1 a with a single fan inlet 101 as in (i) or with a double inlet as (ii) with the fan blades pointing forwards with the direction of fans rotation (forward curved) as in fig 1b (i) for the air movement. A few other combinations of fan and heat recovery solutions are available but these are much less common, these include; designs that mix the available alternatives for heat recovery being; crossflow heat exchanger, counter flow heat exchangers or twin parallel rotary heat exchangers with the following fan alternatives: housed centrifugal fan as show in the fans housing fig 1a with forward curved fig 1b (i), backwards curved (ii) or airfoil (iii) or plenum centrifugal fans backwards curved fig 1 b (ii) and airfoil (iii) installed in a plenum in fig 1c. As a consequence of the heat recovery and fan choices and with a stronger focus on low costs for these smaller AHUs these designs do not offer the same performance measured in terms of specific fan power, heat recovery efficiency and life cycle cost as is seen with a typical larger packaged AHUs.

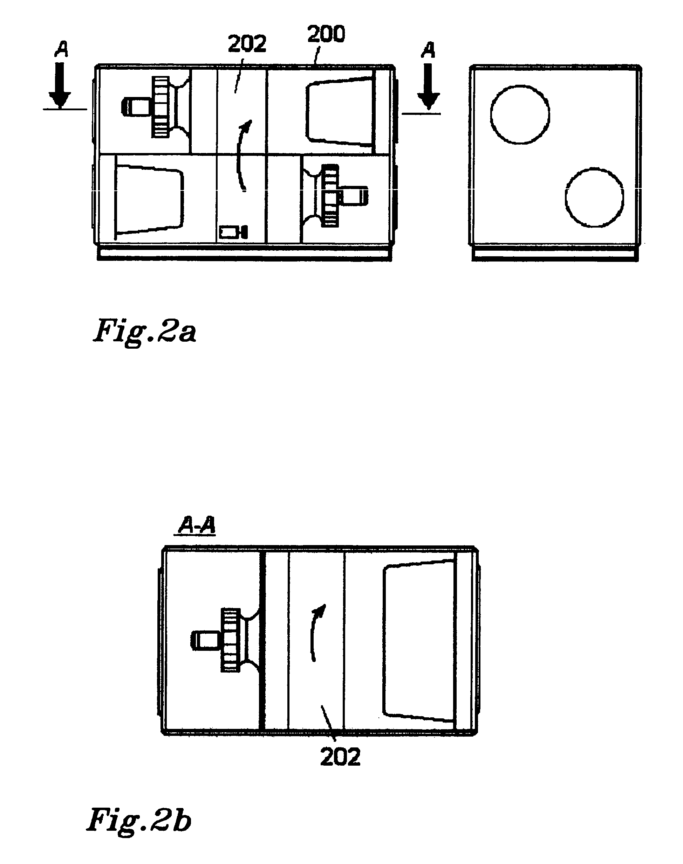

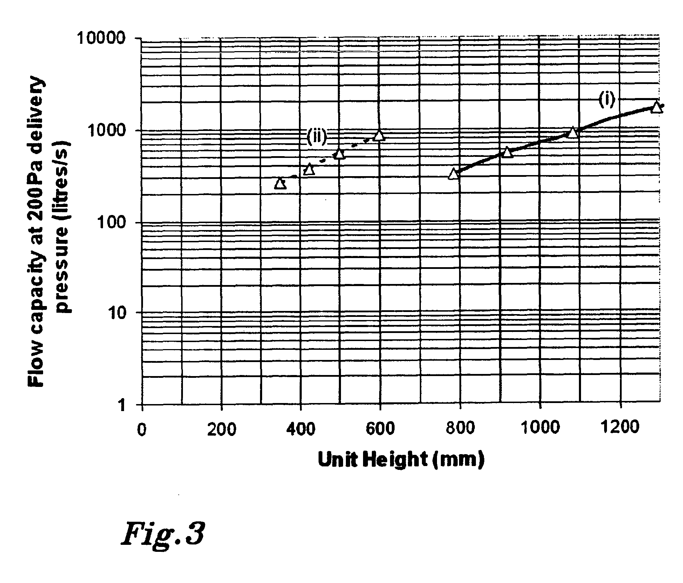

A traditional packaged AHU with a perpendicular rotary heat exchanger (rotor) 202 design has a typical square shape (see fig 2a, showing a section through the centre of the unit, and fig 2b with is a section across the plane of A-A shown in fig 2a). This design has a low ratio of flow capacity to unit height, see figure 3. If this type of unit is sized to have a low enough profile to be installed in a ceiling void (of similar confined space) it would have a limited flow capacity that would only allow for relatively small ventilation rates. For example, at unit height of 600mm with an externally delivery pressure of 200 Pa, the flow capacity would be under 200 l/s (this data is extrapolated from figure 3, data series (i).

A design which offers a similar performance (energy efficiency, energy recovery and noise levels) to the larger central AHUs with a significantly reduced profile offering higher flow capacities relative to the unit's height will have significant advantages for energy savings and will give engineers/architects more flexibility in the ventilation system and building design. This is achieved with the AHU of the invention through the combination of an angled rotor heat exchanger, a centrifugal centrifugal plenum fan and a flow straightening structure.

US patent 4727931 refers to a rotary heat exchanger that is inclined in a similar way to the present invention. What is different, however, and which makes the AHU of the present invention a much better design in terms of energy performance and a higher flow capacity to unit height ratio is the combined use of the centrifugal centrifugal plenum fan, optimisation of the frontal area of the rotor and in the use of a flow guiding (honeycomb) structure at the fans inlet.

The focus of the present invention is therefore to provide an AHU specifically designed to have a low profile for use in tight spaces such as a ceiling void, wall void or floor void. However, installing a unit in such a space causes specific problems for serviceability of the unit. The Low profile AHU of the present invention presents flexible solutions to this dilemma providing sliding doors, alternative access entry points and further designs that allows for ease of removal and replacement to parts of the unit that require frequent access or maintenance in a safe manner

SUMMARY OF THE INVENTION

For an AHU design which employs a rotary heat exchanger (rotor) with centrifugal plenum fans the rotor has been angled to between 9 and 30° to the flow direction through the AHU. Through this change the ratio of flow capacity to unit height has been significantly improved and results in a unit that is more suitable for installation in tight spaces (typically in the ceiling voids or partitioned spaces between walls).

To optimise the performance of the unit measured in terms of specific fan power, life cycle cost, heat recovery efficiency and sound power there are a number of additional design features that improve the design which include the following: an increased rotor area, flow guiding structure and off centre fan placement.

To optimise the serviceability and access to the unit in confined spaces, especially when mounted above ceiling tiles, the design employs sliding doors on the underside (when ceiling mounted) or side (when wall mounted), for easy access to filter, fan assembly and rotary heat exchanger's motor. The fan assembly has been designed especially for ease of removal and replacement in a safe manner. Furthermore the filters can be replaced either by access from the sliding doors or from removable panels at the side of the unit.

In particular the invention relates to a low profile Air Handling Unit (AHU) enclosed in a casing comprising at least one rotary heat exchanger having one or more center areas (r) for air flow, air inlets, air outlets, air filters, access doors, fan enclosures, fan walls and centrifugal plenum fans with fan inlets having centre lines (q) and inlet opening diameters (d), said plenum fans producing an air flow through the AHU, wherein the at least one rotary heat exchanger is tilted at an angle of between 9 to 30° to the air flow direction through the unit; and wherein

a flow straightening structure is placed at the inlet to the fans.

In a more preferred embodiment of the invention the at least one rotary heat exchanger is tilted at an angle of between 9 to 24° to the air flow direction through the unit.

In another preferred embodiment of the invention the at least one rotary heat exchanger is tilted at an angle of between 9 to 18° to the air flow direction through the unit.

In a preferred embodiment the flow straightening structure has a honeycomb cell structure.

In a preferred embodiment the honeycomb cell structure has a hydraulic diameter ($D_{cell}$) from 2 to 20mm and a cell length (T) of 2 to $30*D_{cell}$, the maximum length of the cell length being 0.2 x fan diameter or 100mm whichever is the shortest.

In a preferred embodiment the fan inlet opening diameter (d) is at least 0.92 times the centrifugal plenum fan diameter.

In another preferred embodiment the outer region of the fan inlet has a conic shape, such that the inside wall of said conic shaped fan inlet forms an angle φ of between 30 to 45° to the fans centerline (q).

In another preferred embodiment the flow straightening structure is arranged at the conic shaped fan inlet.

In another preferred embodiment a flow guiding structure creates an angle (ψ) between 45 and 75° to the fan wall, at one or more sides of the flow straightening structure.

In another preferred embodiment the plenum fans are placed so that the centre lines (q) of the fan inlets are substantially vertically and horizontally aligned with the air flow through the respective centre areas (r) of the rotary heat exchanger.

In another preferred embodiment the one or more sound absorbing blocks are placed adjacent to the casing and the fan wall.

In another preferred embodiment the rotor in the rotary heat exchanger is one of the group comprising condensation and hygroscopic rotors.

In another preferred embodiment the access doors are sliding doors.

In another preferred embodiment the access doors are provided as one or more filter access panels are used to provide an alternative access route to the filter.

In another preferred embodiment the one or more fan guides rails and with an integrated retaining tab are used.

A further aspect of the invention relates to the use of the low profile AHU for installation in confined spaces within a building, providing ventilation to such a building.

BRIEF DESCRIPTION OF THE DRAWINGS

Figure 1 shows referenced centrifugal fan types.
Figure 2 shows a traditional AHU with a rotary heat exchanger
Figure 3 shows a comparison of the flow rate versus height for existing AHU designs (with rotary heat exchangers) compared to the invented Low Profile range.
Figure 4 shows general views of the invention
Figure 5 shows sound improvements of the invention with the use of the flow guiding structure.
Figure 6 shows examples of typical vibration isolation installations.
Figure 7 shows alternative ways of applying the flow straightening structure applied to the fan's inlet.
Figure 8 shows alternative ways of applying the flow straightening structure against the fan wall
Figure 9 shows the alignment of the fan's inlet.

Figure 10 shows details of the sound attenuating wedge

Figure 11 shows results of a computation fluid dynamics (CFD) analysis for the invention..

Figure 12 shows the dimensions used in the performance simulation comparison

Figure 13 shows the relationship of flow capacity against unit height for the invention and prior art units

Figure 14 shows general views of the sliding doors and the filter's access panels

Fig 15 shows access to the rotary heat exchangers motor, belt drive and speed sensor through the rotor's removable access panel.

Figure 16 shows access to the rotary heat exchangers motor, belt drive and speed sensor through the rotor's removable access panel.

Figure 17 shows general views of the installation of the fan assembly.

DETAILED DESCRIPTION OF THE INVENTION

In the following examples the invention will be described in more detail. However, the described embodiments mentioned below are only given as examples and should not be limiting to the present invention. Other solutions, uses, objectives, and functions within the scope of the invention as claimed in the below described patent claims should be apparent for the person skilled in the art.

As used herein the term "Life Cycle Cost", (LCC) refers to an estimation of the energy and investment costs and is commonly used to compare different air handling unit solutions.

As used herein the term "fan diameter" is largest diameter that the trailing edge of the fan blades at the outlet of the fan. This figure is commonly used to characteristic the size of a centrifugal fan.

As used herein the term "Specific fan power" (SFP) is intended to mean the function of the volume flow of the fan and the electrical power input; SFP = Pe/ V, where,

V is volume flow (l/s) for the greater of the supply or extract flows for the installation and Pe is electrical power (W) consumed by the whole AHU.

As used herein the term "Blade Pass Frequency" represents the frequency at which a fan blade would pass a fixed point around the outlet of the fan where BPF = n t / 60, and BPF = Blade Pass Frequency (Hz), n = rotation velocity (n), t = number of blades,

As used herein the term "temperature transfer efficiency" is the heat recovery efficiency exchanger and refers only to the temperature recovery (otherwise known as sensible recovery) $\eta t = (t2 - t1) / (t3 - t1)$, where $\eta t$ = temperature transfer efficiency, $t1$ = temperature outside air before the heat exchanger (°C), $t2$ = temperature outside air after the heat exchanger (°C) and t3 = temperature inside air before the heat exchanger (°C)

As used herein the term "fan laws" relate to a set of relationships for adjusting the performance of a centrifugal fan from one fan speed (initial) to another (final) as follows: $\text{Airflow}_{final} = \text{Airflow}_{initial} (\eta_{initial}/\eta_{final})$

$$\text{Pressure}_{final} = (n_{initial}/n_{initial}l)^2$$

$$\text{Power}_{final} = (n_{initial}/n_{initial})^3$$

$$\text{Sound Power}_{final} = \text{sound power}_{initial} + 55 * \log 10 * (n_{initial}/n_{final})$$

Where n=fan speed

As used herein the term "hygroscopic treatment" enables the rotor gives the surface of the heat exchanger the ability to attract water molecules from the surrounding environment through either absorption or adsorption. This is used when one wishes to transfer humidity from one airstream to the other.

As used herein the term "hydraulic diameter", DH, is a commonly used term when handling flow in noncircular flow channels and gives the equivalent diameter of round tube in terms of resistance to flow. Definition: DH=4A/P, where A is the cross sectional area and P is the wetted perimeter of the cross-section.

As used herein the term "Rotor" is intended to mean Rotary Heat Exchanger (other names: Heat wheel, Enthalpy wheel)

As used herein the term "Packaged air handling unit (AHU)" is intended to mean a unit providing balanced supply and extract ventilation which has all the necessary components (i.e. extract and supply fans, heat recovery, filters and control) integrated into one packaged unit.

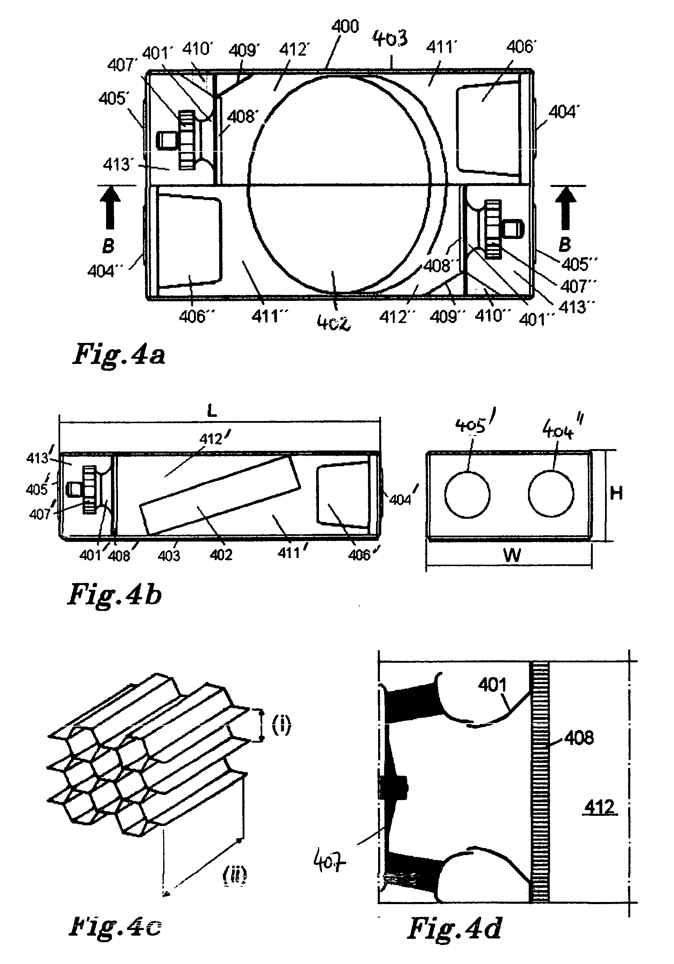

The advantages of the low profile Air Handling Unit (AHU) of the invention will now be described in detail with reference to the accompanying drawings wherein Fig 4a shows a general plan view of a low profile AHU (400) of the invention. Generally the casing 403 of an AHU has the shape of a rectangular box with the dimensions length (L) x width (W) x height (H), wherein the air flows through the unit in the longitudinal (L) direction. However, in the present invention the height (H) of the casing is significantly reduced compared to typical prior art air handling units, as the AHU of the invention is sized to have a low enough profile to be installed in a confined space such as for example the ceiling or floor void. It will be shown that the flow capacities and ventilation rate of the AHU of the invention are comparable to those of traditional packaged AHU having a larger size.

On each short end, the casing 403 includes air inlets 404', 404" through which air enters the AHU and air outlets 405', 405" where from air exits the AHU (see figures 4a and 4b). The casing 403, further includes one or more access doors (not shown), fan enclosures 413', 413", one or more air filters 464', 406" covering the air inlets 404', 404" on the inside of the casing 403. The air filters are generally composed of a fibrous material which removes solid particulates such as dust, pollen, mold, and bacteria from the air before it enters the AHU. The casing further comprises at least one rotary heat exchanger 402 (hereafter referred to as a rotor), one or more centrifugal plenum fans 407', 407" and one or more flow straightening structures 408', 408", all of which will be described in more detail below. Optionally the casing 403 may include one or more flow guiding structures 409', 409" and sound attenuating wedges 410', 410".

Figure 4b shows a sectional plane (viewed from B-B in Fig. 4a) through the centre of the rotor towards one half of the unit. Looking at the air flow from this view, the air would enter the AHU at the inlet 404', pass through the air filter 406' then through a filter plenum 411' and to the rotor 402'. Heat is exchanged between air and the rotor as the air passes through channels of the rotor. Upon exiting the rotor the air passes through an inlet plenum 412', through the flow straightening structure 408' to the inlet of the fan 401' whereupon the centrifugal plenum fan 407' increases the delivery pressure of the air and then blows the air out through a fan enclosure 413' and to the AHU's outlet 405'. As can be concluded from figure 4a this air flow is reversed in the other half of the unit where the air flow enters inlet 404" situated at the same short end of the housing 403" as the outlet 405". The air flows past the air filter 406" then through the filter plenum 411", to the rotor 402", to the inlet plenum 412", through the flow straightening structure 408" to the inlet of the fan 401 ", past the centrifugal plenum fan 407", through the fan enclosure 413" and to the AHU's outlet 405", where the air exits the AHU.

As mentioned above, the aim of the present invention is to provide an AHU specifically designed to have a low profile for use in such tight spaces with the minimum noise levels so that the unit can be used in close proximity to occupied spaces while at the same time provide an energy efficient solution comparable to that available for commercial centralised ventilation solutions. This objective is achieved by combining a centrifugal plenum fan of either backwards curved or airfoil type with a rotary heat exchanger that is tilted at an angle between 9 to 30° to the flow direction through the unit, (in the case of a ceiling void unit the rotor is tilted relative to the horizontal plane). Considering the lower pressure delivery requirements typical of smaller ventilation zones one could also consider the use of a mixed flow fan being employed in the said invention. Angling the rotor at an angle between 9 and 30° enables a unit with a significantly reduced height over that of the reference prior art unit, without incurring the penalty of large pressure loss that would result if the rotor was placed at an angle less than 9° to the horizontal. Angling the rotary heat exchanger between 9 and 30° also enables a rotary heat exchanger with a larger area to be used than the typical AHU, of the prior art, which has the benefits of reducing the pressure drop across the rotor. The rotary heat exchanger is preferably angled between 9 and 24°, and more preferably at an angle between 9 and 18° to the airflow direction through the unit,.

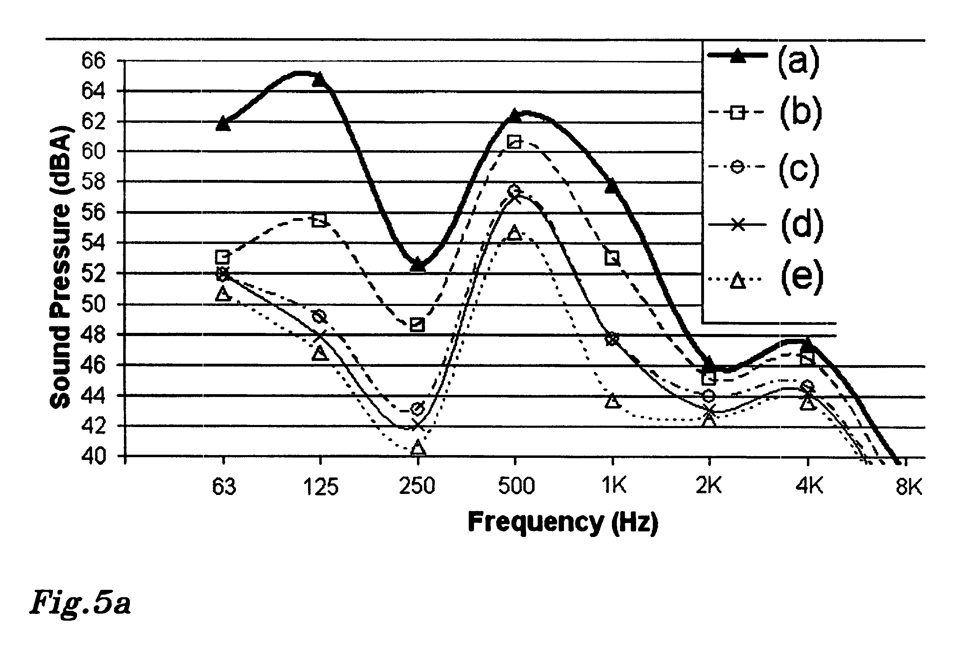

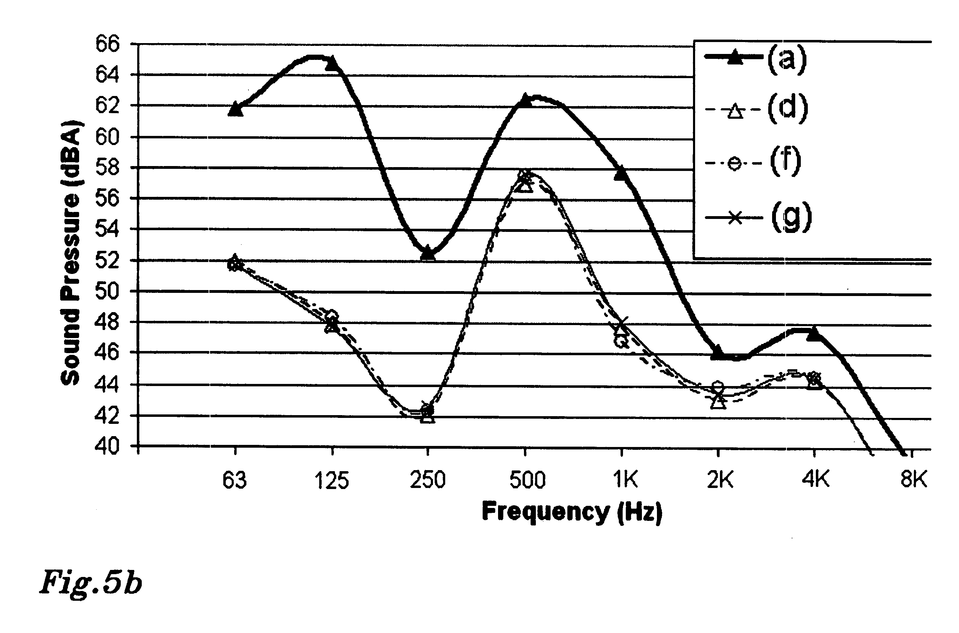

A flow straightening structure 408 (Fig. 4c), is placed at the inlets 401 to the centrifugal plenum fans 407 (figure 4d). The flow straightening structure 408 is a matrix of short length passageways parallel to the fans centreline allowing the air to pass through. This has the effect of straightening the swirl in the flow through the inlet plenum 412 and in reducing the turbulent structures in the flow. The combined effect of this is that the fan noise is significantly reduced. In a preferred embodiment of this invention the flow straightening structure 408 is a honeycomb cell structure The cell structure can have hydraulic diameters ($D_{cell}$) in the range from 2 to 20mm with a cell length T=2 to 30*$D_{cell}$ with a maximum length of 0.2 x fan diameter or 100mm, whichever is the shortest. Preferably the honeycomb structure has a cell size of 6.4mm figure 4c (i) and channel length of 30mm figure 4c (ii). For the invention the improvements are substantial. With the honeycomb cell structure in place the sound power levels are almost identical to reference prior art unit of a square shape with a perpendicular rotor and with the same fan diameter providing the same flow and pressure capacity. Tests where undertaken with various sizes and lengths of honeycomb placed at the fans inlet, the results of which are shown in figures 5a and 5b. where the curves reference:

(a) no honeycomb
(b) Dcell=25.4mm, T=50mm
(c) Dcell=12.7mm, T=50mm
(d) Dcell=6.4mm, T=50mm
(e) Dcell=3.2mm, T=50mm
(f) Dcell=6.4, T=30mm

(g) Dcell=6.4, T=20mm, where

Dcell is the honeycomb cell diameter, fig 4c and T is the honeycomb cell length fig 4c (ii)

Without the honeycomb cell structure the sound levels are significantly increased as shown in curve (a) of fig 5a and fig 5b. Figure 5a shows that the smaller cell size tested 3.2mm figure 5a curve (e) has the greatest sound improvement, however, due to the lower pressure loss, the 6.4mm cell figure 5a curve (d) was selected for the preferred embodiment. Figure 5b shows that lengthening the honeycomb cell structure over 20mm figure 5b curve (g) had little effect on the sound improvements. A 30mm channel length was chosen, however, for the preferred embodiment as a block of this length was more rigid and less flexible compared to the 20mm channel length.

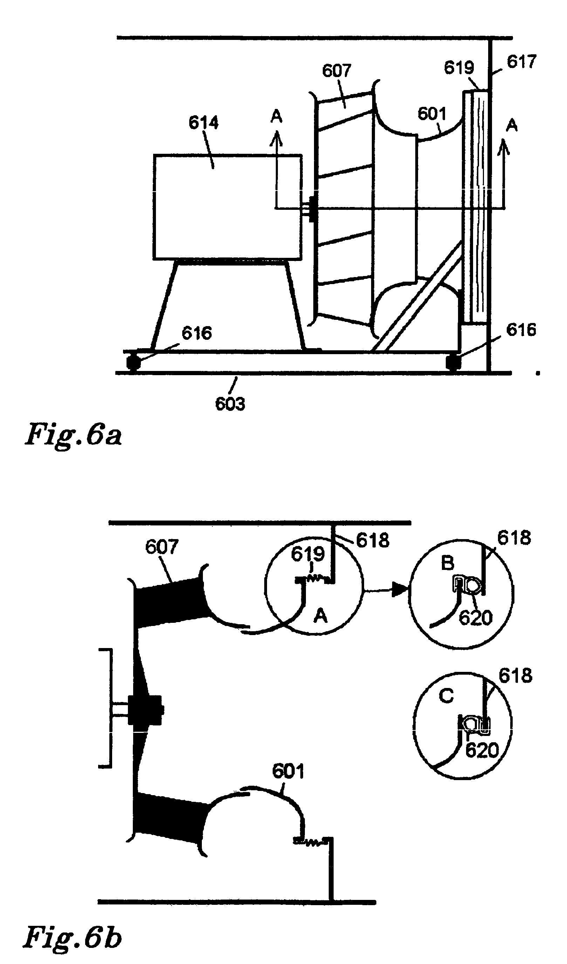

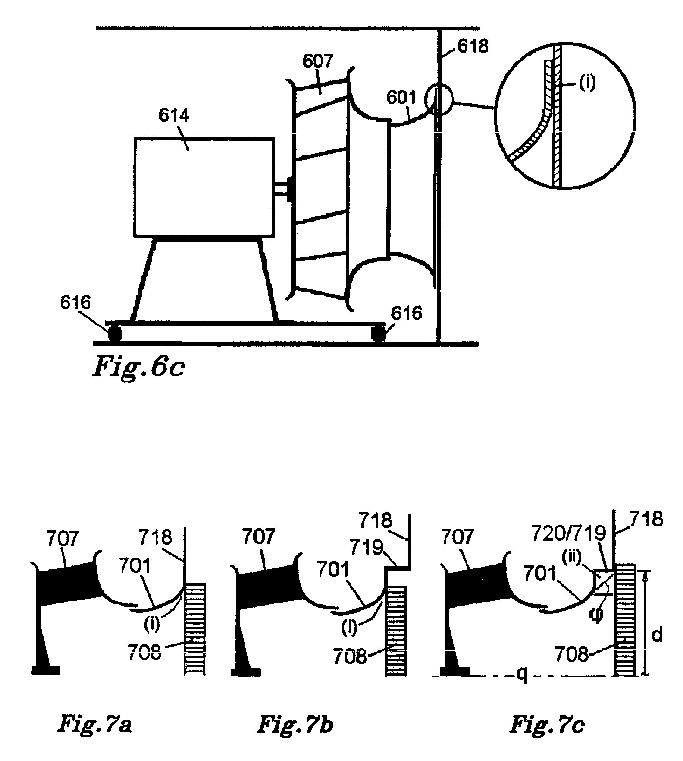

Traditionally, as is shown in Figure 6a, the centrifugal plenum fan 607, fan inlet 601 and fan motor 614 are rigidity connected together by the motor assembly mounting frame 615 and mounted to the AHU casing 603 through vibration isolation dampers 616. To provide a seal between the fan wall 618 and the fan inlet 601 it is common that a flexible cloth coupling 619 as in Figure 6b, alternative (i), or that a sealing gasket 620 is inserted at the edge of the fan inlet 601 as shown in alternative (ii), or at the rim of the fan wall 618 as shown in alternative (iii). Another possible mounting arrangement is where the centrifugal plenum fan 607 and motor 614 are mounted together and vibration isolated with the fan inlet 601 fixed directly to the fan wall 618 around the contact diameter shown in figure 6c as (i).

The fixation of the flow straightening structure at the inlet of the fan requires some careful consideration in order to not lose any advantages that the addition of a flow straightening structure gives. One embodiment of the invention (Figure 7a and 7b) is to place the flow straightening structure 708 directly on the fan's inlet 701. This placement is, however, not considered to be ideal as the performance of the centrifugal plenum fan is adversely affected due to the flow restriction caused by the acute angle that the fan's inlet 701 makes with the outflow face of the flow straightening structure 708 at position (i). This acute angle is made with traditional fan inlet shape which forms a tangent to the fan wall 718.

An improved embodiment of the invention (Figure 7c) is to place the flow straightening structure 708 at a short distance from the fan inlet 701 with step up to a larger diameter marked (ii) in figure 7c where the ideal distance is such that that tangent to the fan inlet opening diameter marked d on figure 7c forms an angle $\varphi$ of between 30 and 45° to the centrifugal plenum fan's centre line marked (q). The fan inlet opening diameter (d) fig 7c should be at 0.92 times the centrifugal plenum fan diameter. A step up to larger diameter is naturally present when using a flexible cloth coupling 719 or sealing gasket 719 as shown in figure 7c and figure 6d. This improves the performance of the centrifugal plenum fan by decreasing the resistance to the flow at the outer periphery of the honeycomb arid by decreasing the velocity, hence pressure loss, through the flow straightening structure 708 channels. Unfortunately, when compared to embodiment shown in Figure 7a there is an increase in sound with this arrangement due to the outlet from the flow straightening structure 708 striking the perpendicular wall of the fan inlet 701 and causing turbulence in the outer periphery of the inlet at position (ii). The increase in sound is especially noticed at the frequency of the blade passing frequency (BPF) and those frequencies surrounding the BPF.

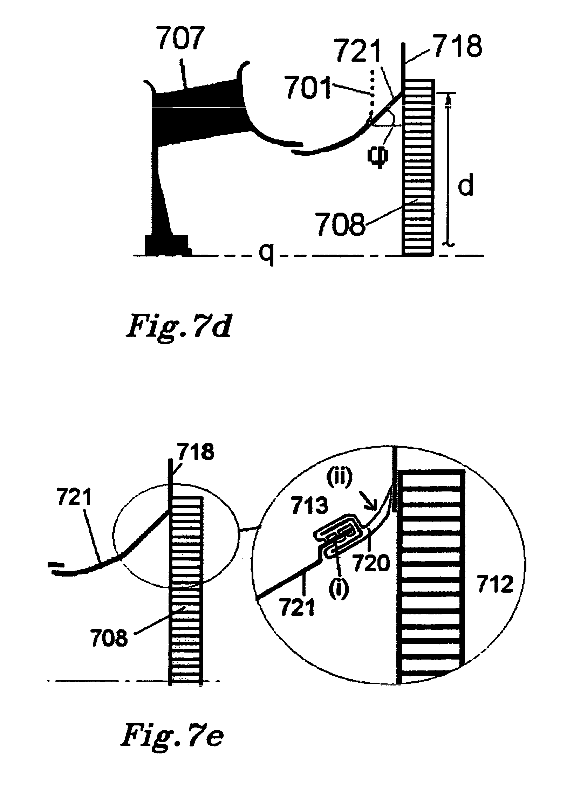

The preferred embodiment (Figure 7d) is to place the flow straightening structure 708 at the end of a conic fan inlet 721 where the outer region of the fan inlet 701 is changed to have a conic shape such that the inside wall of the fan inlet (721) forms an angle $\varphi$ of between 30 to 45° to the centrifugal plenum fans centreline (q). The fan inlet opening diameter shown as d in fig 7d is at least 0.92 times the centrifugal plenum fan diameter. This arrangement minimises the flow disturbance around in the periphery of the fans inlet 701 at the outlet of the flow straightening structure 708. This arrangement is optimal in terms of fan performance and sound reduction.

For a practical embodiment of the conic fan inlet 721 when the fan inlet is coupled to the centrifugal plenum fan and motor as in the vibration mounting installation types, shown in figure 6a, a sealing gasket 720 shown figure 7e, is placed at the end of the conic fan inlet 721 which is recessed at (i) such that the sealing gasket is flush with inlet so that the transition into the fan inlet is a smooth as practical. The sealing gasket 720 is so arranged that the positive pressure produced by the centrifugal plenum fan 707 pushes the sealing gasket at (ii) against the fan wall 718 thereby providing a good seal to minimise the leakage of air from the fan enclosure 713 to the inlet plenum 712.

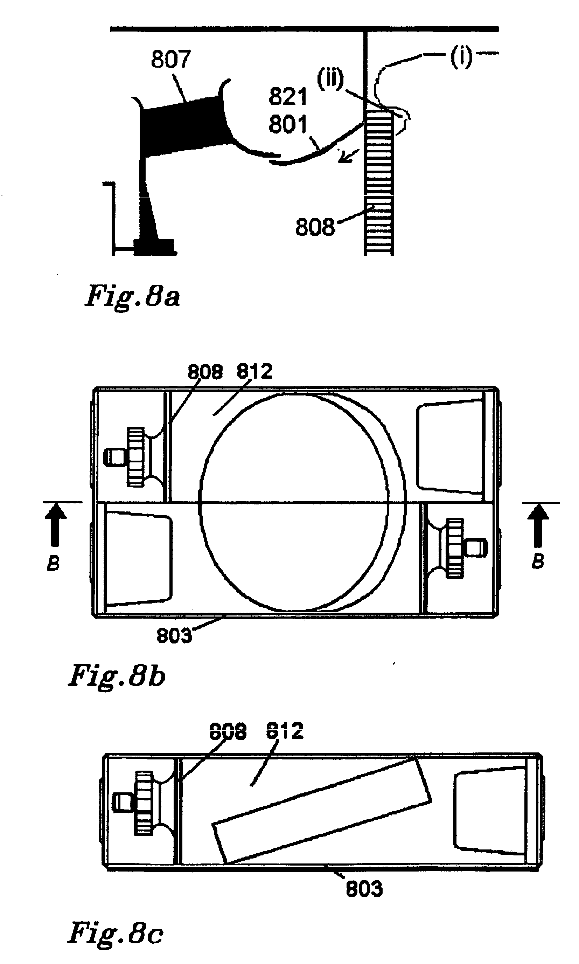

It is important to ensure that the flow straightening structure does not protrude out from the fan wall as this would allow air to swirl around the flow straightening structure and enter the channels from the side, as depicted in the flow path line of (i) in figure 8a, which would disrupt the airflow in the outer periphery of the fan's inlet at (ii) thereby increasing the noise levels especially at the fan's BPF. An improved embodiment is to extend the flow straightening structure to cover the whole of the fan wall face as shown in figures 8b and 8c.

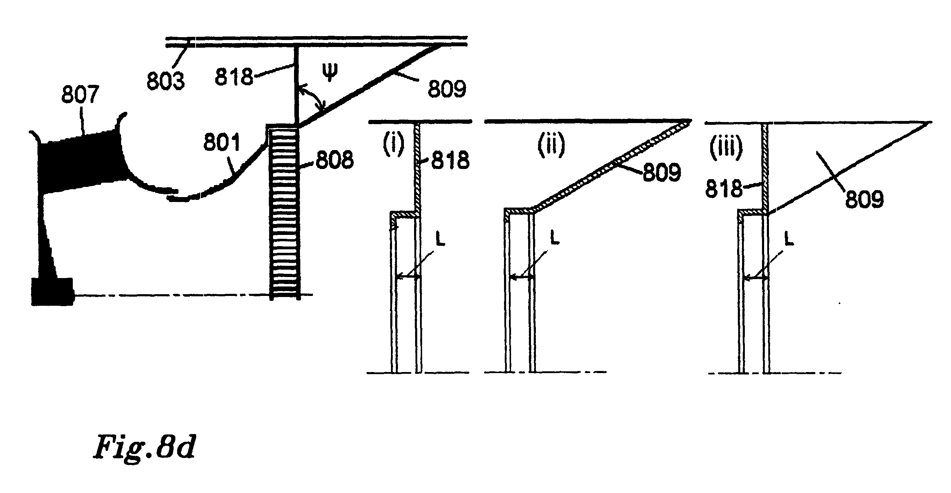

In an advantageous embodiment the fan wall is flush with the front of the flow straightening structure's 808 inlet face, which can be done by providing a recess in the fan wall 818, with a depth equal to the flow straightening structures 808 length L figure 8d (i) to hold the flow straightening structure 808. An improved embodiment would be to angle the fan wall 818, with an angle ($\psi$) of between 45 and 75°, adjacent to the flow straightening structures 808 at one or more sides to form a flow guiding structure 809 so that the flow would be better directed into the channels as shown in Figure 8d (ii). This flow guiding structure 809 could be a integral part of the fan wall as in option (ii) or this could made from a acoustic foam wedge such that it has a secondary function of absorb sound as shown in figure 8d (iii).

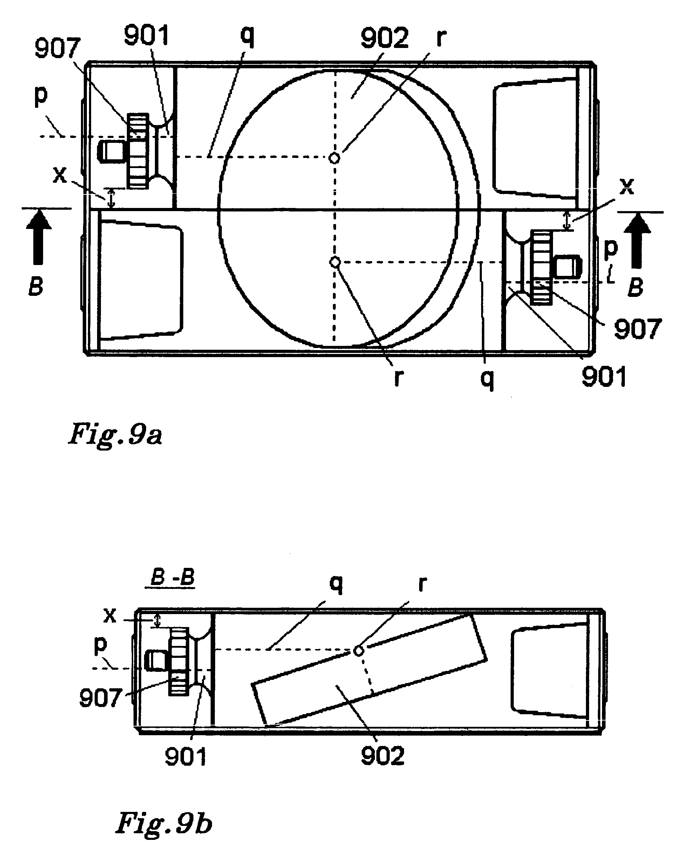

As shown in Figure 9, the centrifugal plenum fan 907 and fan inlet 901 centre lines (q) are offset in both perpendicular directions from the centre line of the fan enclosure (p) and are as close as possible to alignment with the bulk flow from the rotor 902, line (q) whilst ensuring that the shortest distance between the fan blades to the plenum wall in the plane perpendicular to the fans centre line is greater than 0.1*fan diameter. The lines (q) are substantially vertically and horizontally aligned with the air flow that passes through the respective centres of the rotary heat exchangers area (r). This is done to maintain as uniform as possible flow to the fan's inlet and minimise the amount of swirl in the flow stream. This feature improves the pressure delivery by 20Pa for the reference invention unit with a sound improvement of 3dB.

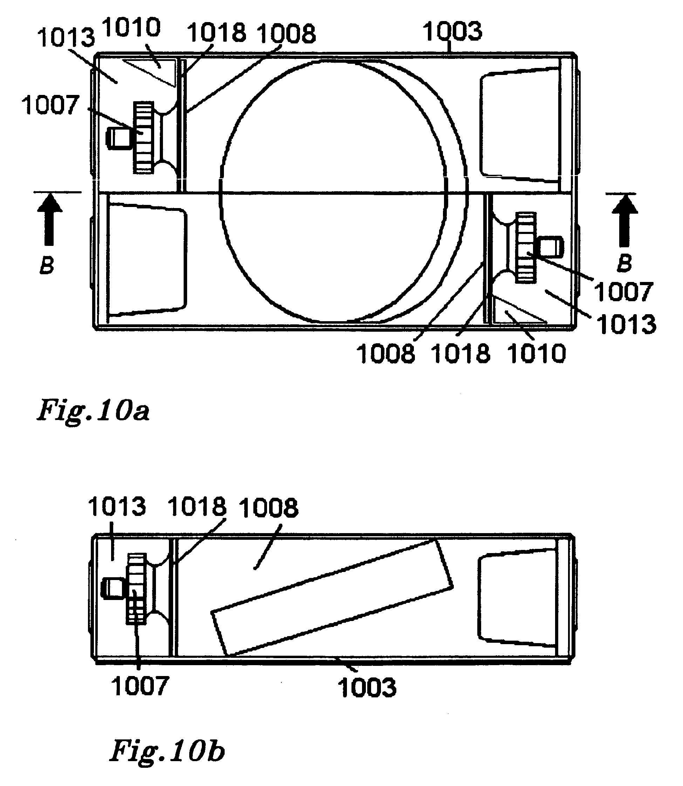

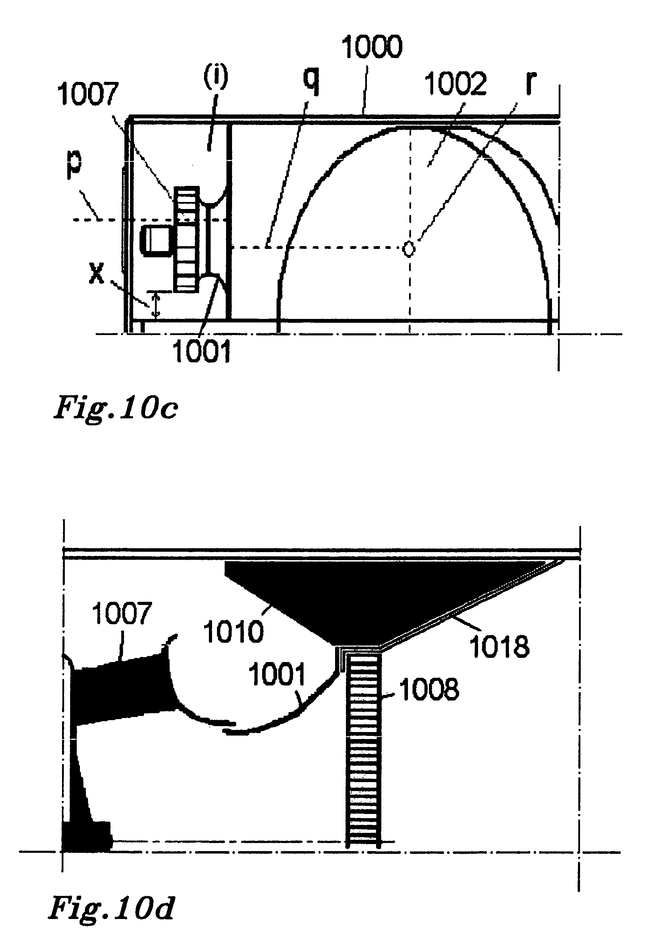

Moving the fan inlet closer to the rotor outlets centreline when looking at the plan view of figure 9a allows more space to one side of the centrifugal plenum fan in the fan enclosure 913. This allows one to place in a sound absorbing block 1010 figure 10a to the outer side wall, i.e. the casing 1003. Preferably the sound absorbing block has a triangular shape and is adjacent to the casing 1003 and the fan wall 1018. This serves two purposes; the first to help direct the air flow exiting from the centrifugal plenum fan and the second being to reduce the noise within the fan enclosure. The acoustic material (typically a mineral fibre or a synthetic foam) in the triangular shaped sound absorbing block 1010 reduces sound by direct absorption of a portion of the sound energy and secondly it blocks the direct path of the pressure pulsations generated from the outlet of the centrifugal plenum fan from reaching the side of the units casing 1003 immediate opposite the fans outlet in the largest flow path from the centrifugal plenum fan. This feature improves the pressure delivery at 430 l/s for the reference invention unit by 20Pa with an improvement to the noise levels by 5dB at the Blade passing frequency.

In order to determine the relationship regarding optimal rotor diameters and rotor angles vs. the height of the AHU, a series of computation fluid dynamics simulations were made.

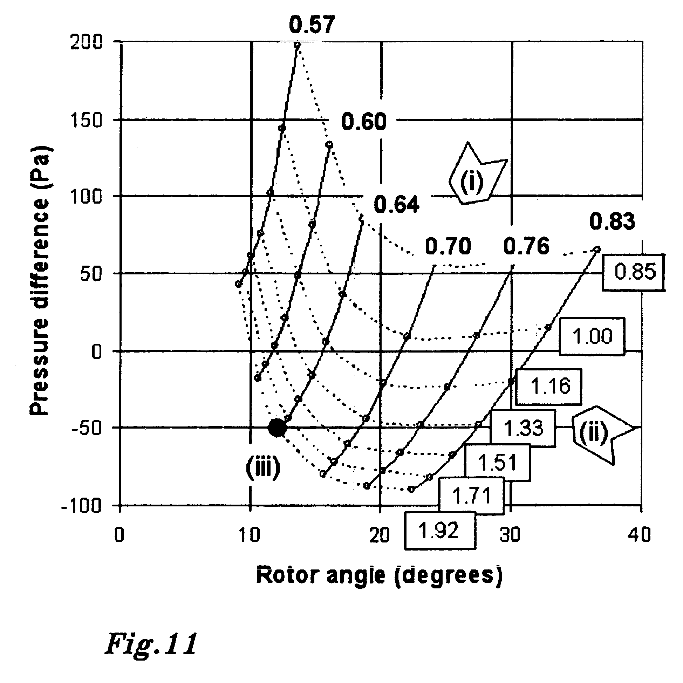

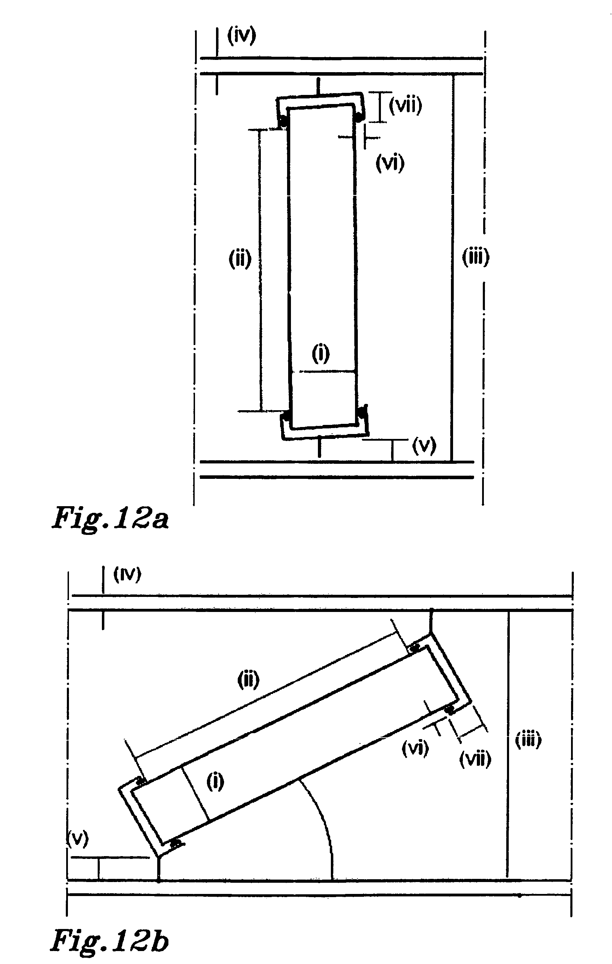

Figure 11 shows the results from these simulations of performance of an AHU of the invention with a range of rotor diameters and rotor angles. The following assumptions where used when creating the simulation model, see figure 12b:

Rotor width 200mm (industry standard width)

   (i) Centrifugal centrifugal plenum fan 407 diameter: 250mm
   (ii) Rotor 402 opening diameter varied from 600 to 950mm
   (iii) Unit heights varied from 550 to 650mm
   (iv) AHU Casing 403 thickness 36mm
   (v) Extra distance required for practical rotor assembly block 1222 installation 10mm, each side.
   (vi) Extra thickness of the rotor casing 10mm for the inclusion of the rotor sealing device 1224
   (vii) Minimum extra length of the rotor housing across the rotors diameter 25mm.

The width of the unit was varied such that the ratio of the hydraulic diameter, for the centrifugal plenum fans housing in a section perpendicular to the fans centreline, to fan diameter was 1.9. This is a minimum recommended figure based of in-house testing of the centrifugal plenum fan. Below this value the performance of the centrifugal plenum fan drops off exponentially as the fan becomes confined by its enclosure. When the ratio of hydraulic diameter to fan diameter a ratio of 1.5 the airflow, the performance of the centrifugal plenum fan is reduced by 5% whereas with a ratio above1.9 there are only marginal gains in the centrifugal plenum fans airflow.

Using the same dimensions for i, iii, iv, vii, and v as indicated above in figure 12b the dimensions of the prior art unit with a perpendicular rotor (hereafter referred to as the "reference prior art unit") are then: Rotor diameter (ii) 630mm and unit height (viii) 800mm see figure 12 a.

The pressure difference in figure 11 is the difference in pressure losses predicted with an airflow of 430 l/s for the invention against the reference prior art unit. The rotor diameter ratio figure 11 (i) and the unit height ratio, figure 11 (ii) are the ratio of the invention dimension to that of the reference prior art unit.

Figure 11 clearly show how the losses increase with decreasing rotor angle. It is seen that when the same rotor diameter is retained (figure 11, ii=1.00) the pressure losses become significant below 16°. Increasing the rotor area can offset these losses and allow lower rotor angles to be used without significant penalties. It is also possible to improve the performance of the reference prior art unit if the rotor has more than a 20% increase in the rotor diameter from a rotor tilt of 15° upwards and from 10° upwards if the rotor area is increased to 200% of the original.

If the rotor tilt is kept above an angle of 22° then there are only marginal losses seen in the unit. The position of the preferred embodiment of one unit size of the invention is marked on figure 11 as (iii). Considering that the purpose of the invention is provide a low profile unit delivering a maximum amount of airflow whilst maintaining a good energy consumption then the most preferred solution is to select a rotor angle of between 9 to 30°, more preferably a rotor angle of between 9 to 24° and most preferably a rotor angle of between 9 to 18°. The constructed and tested invention AHU has a height of 500mm, however, to, provide flexibility in installation as the available space, for a typical ceiling void for example, varies from project to project then a number of AHU's of differing heights shall be offered. Following standard engineering standard practice the heights of this range of units would generally follow a geometric series.

This invention uses a unique combination of the angled rotor with increased rotor area, a centrifugal plenum fan and flow straightening device at the inlet to create an AHU for use in confined spaces that provides higher flow delivery possibilities whilst providing a certain pressure and sound level. A rotary heat exchanger provides the best ratio of heat recovery efficiency to pressure drop for a specific face velocity of all heat exchanger types and so is the optimal choice when considering both energy recovery and the energy required from the centrifugal plenum fans to push the airflow through the heat exchanger. The rotary heat exchanger enables two differing types of rotors to be used: a condensation and a hydroscopic rotor. The condensation type is the most usual (typically of aluminium). This type only transfers humidity in cases when the dew point of one of the air streams is reached. A hydroscopic rotor (alternatively known as enthalpy rotor) has a hydroscopic coating (e.g. sulphates and silica gel) or a surface etching treatment that applied to the aluminum foil and moisture is transferred by pore sorption of moisture.

A use of a rotor in the invention also then has the additional benefit of allowing for recovery of humidity and increasing the total energy recovered through latent heat recovery. The centrifugal plenum fan enables higher pressures to be delivered over a housed forward curved fan and less sensitive to outlet ducting placement due to the reduce outlet velocities.

Through the use of the invention, with the addition of flow improvement devices, a similar flow capability and performance (measured in terms of SFP, LCC, heat exchange efficiency and noise power levels) can be delivered from a unit when compared to the reference prior art range of units with a much reduced height according to the curves of figure 3.

The performance capacity of a low profiled AHU can be reviewed by determining the maximum flow capability of the unit whilst providing a certain pressure, to drive the flow through the ducting and any connected ventilation components, whilst meeting a certain noise requirement that should not be exceeded. As the height of the unit will physically constrain the capacity of the unit it is useful to have a high a ratio of flow capacity to unit height.

The term NR35 refers to the Noise Rating - NR - curves developed by the International Organization for Standardization (ISO) to determine the acceptable indoor noise levels. For a NR35 which is commonly a requirement defined for indoor office environments the highest sound in any one octave band must be under the sound pressure values as shown in table 1

Table 1

| Octave band (Hz) | 63 | 125 | 250 | 500 | 1000 | 2000 | 4000 | 8000 |
|---|---|---|---|---|---|---|---|---|
| Sound pressure level (dB) | 63,1 | 52.4 | 44.5 | 38.9 | 35 | 32 | 29.8 | 28 |

To determine the maximum limits for sound power that an AHU can generate an addition of 8dB is made to the sound pressure levels of table 1. This figure is representative of the differences between the sound power and sound pressure in a large office environment.

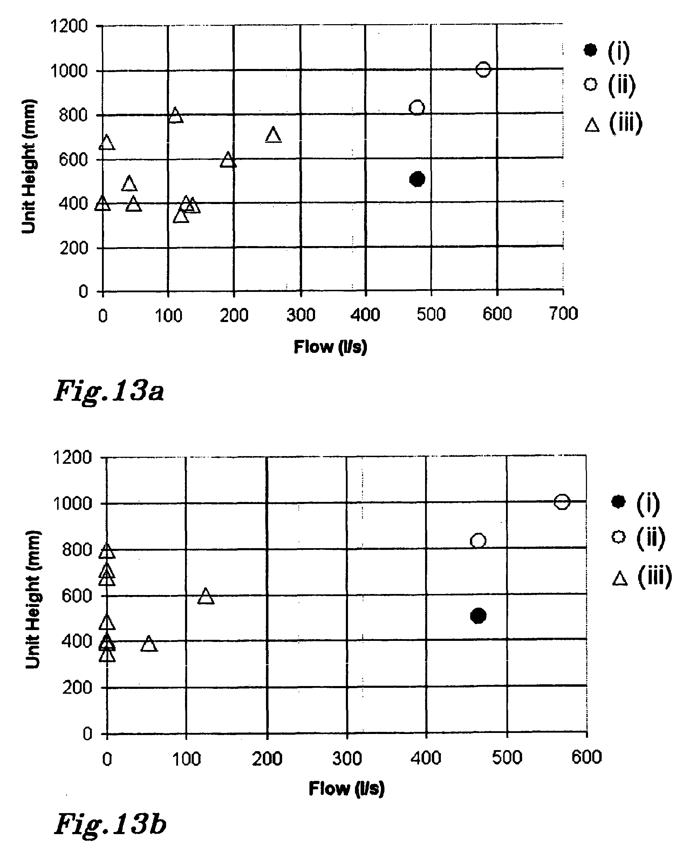

Figure 13a shows a comparison of unit height against maximum flow rate that can be provided whilst providing a duct delivery pressure of 100Pa and meeting a sound to surroundings pressure level of NR35 plus 8dB of the reference invention and prior art units.

Figure 13b shows a comparison of unit height against maximum flow rate that can be provided whilst providing a duct delivery pressure of 200Pa and meeting a sound to surroundings pressure level of NR35 plus 8dB of the reference invention and prior art units.

The units height dimension is considered to be the minimum of the width or height of the unit since is it assumed that one can orient the unit to fit the confined space.

For figures 13a and 13b point (i) is for the reference invention unit with a height (H) of 500mm with a rotor with a tilt angle of 12° and a rotor area that is twice the reference prior art units of figure 13 points (ii). Points (ii) are for two unit sizes in the range of the reference prior art units with a square AHU profile, a perpendicular rotor and a same fan diameter as the reference invention unit for the same flow and pressure capacity.

Points (iii) represent competitor prior art units that are suitable for installations in confined spaces having a height under 800mm. These prior art units were of the following types:

a) forward curved housed centrifugal fans with a crossflow heat exchanger.

b) forward curved housed centrifugal fans with a tilted rotary heat exchanger

c) forward curved housed centrifugal fans with 2 parallel rotary heat exchangers

d) forward curved housed centrifugal fans with a counterflow heat exchanger

e) backwards curved plenum fan with a counterflow heat exchanger

Figure 13a clearly shows that for a given height the flow capacity available whilst delivering 100Pa and meeting the NR35 + 8dB sound power requirement the flow capacity available from the reference unit invention is at least double than that of the competitor prior art units. Figure 13b shows that very little flow or no flow can be provide by competitor prior art units whilst delivering 200Pa and meeting the NR35 + 8dB sound power requirement. This gives the invention greater usability in a confined space installations as in practice the invention can deliver at least twice the flow and hence provide ventilation to twice the floor space with a delivery pressure of 100Pa. The invention also enables flexibility in the choice of installation as the invention has more available pressure to drive flow through a greater duct installation or an installation with more components

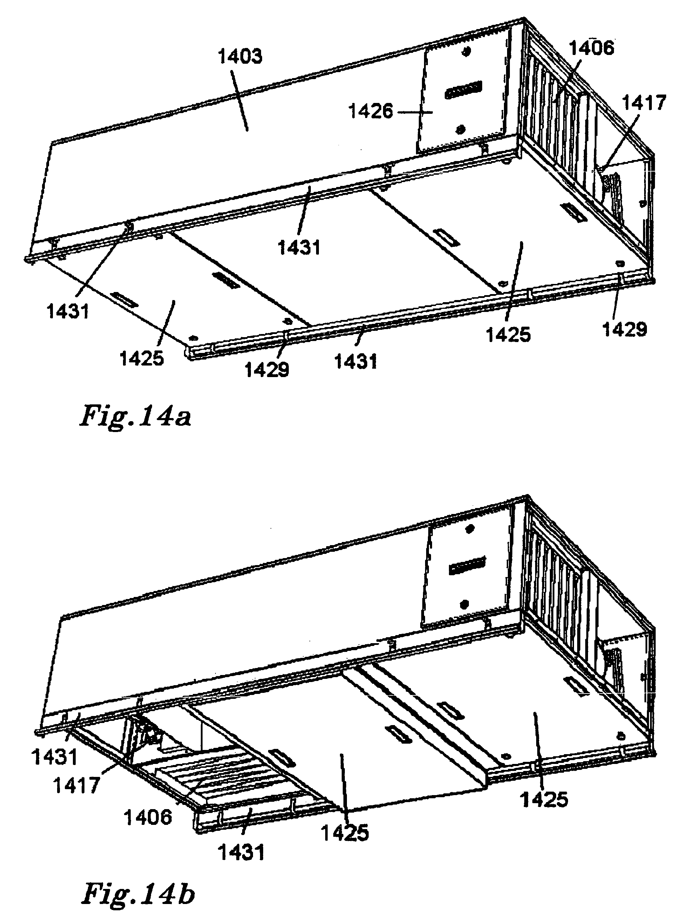

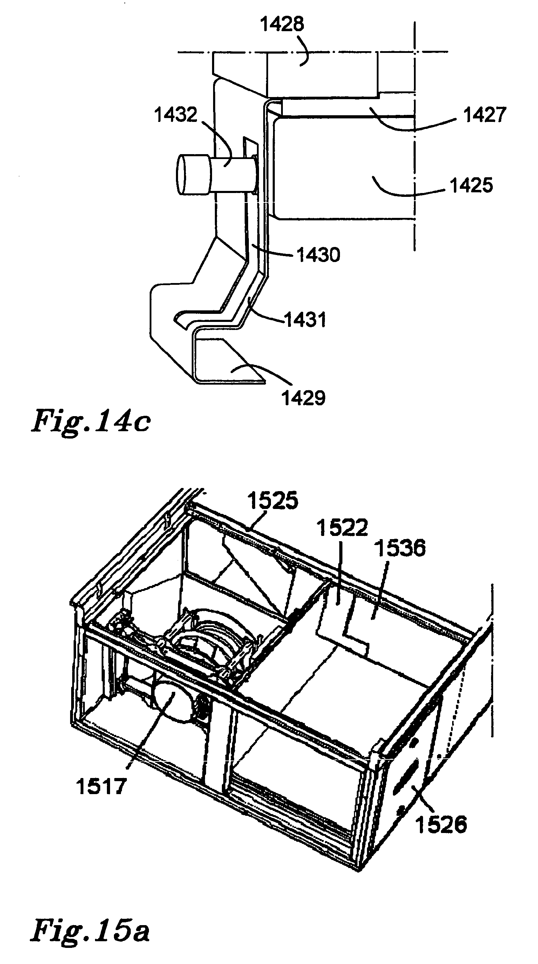

The focus of the present invention is to provide an AHU specifically designed to have a low profile for use in tight spaces such as a ceiling void, wall void or floor void. As pointed out above, installing a unit in such a space may cause specific problems for serviceability of the unit. This problem can also be further compounded if the access door swings outwards when opening. To take the filter from underneath can be difficult for example with a ceiling mounted unit when a ceiling tile framework or when other services (i.e. water piping, electrical, sprinkler systems, and lighting) are installed under the unit. Therefore, in order to increase the accessibility to the AHU inside the casing 1403, sliding doors 1425, seen closed in figure 14a and with one open in figure14b, are provided to allow access to the fan assembly 1417, the filter 1406, and to the key maintenance points of the rotary heat exchanger assembly through the access panel 1426. This sliding door has a locking mechanism that when locked pulls the sliding door 1425 upwards compressing a foam covering 1427, shown in figure 14c, against the unit side wall 1428 forming an effective air tight seal. When unlocked the door drops down and on rests in the groove 1430 formed by the angles of the sliding door guide 1431 by use of a bar extension 1432 allowing the door to be slid to the side for access to the unit.

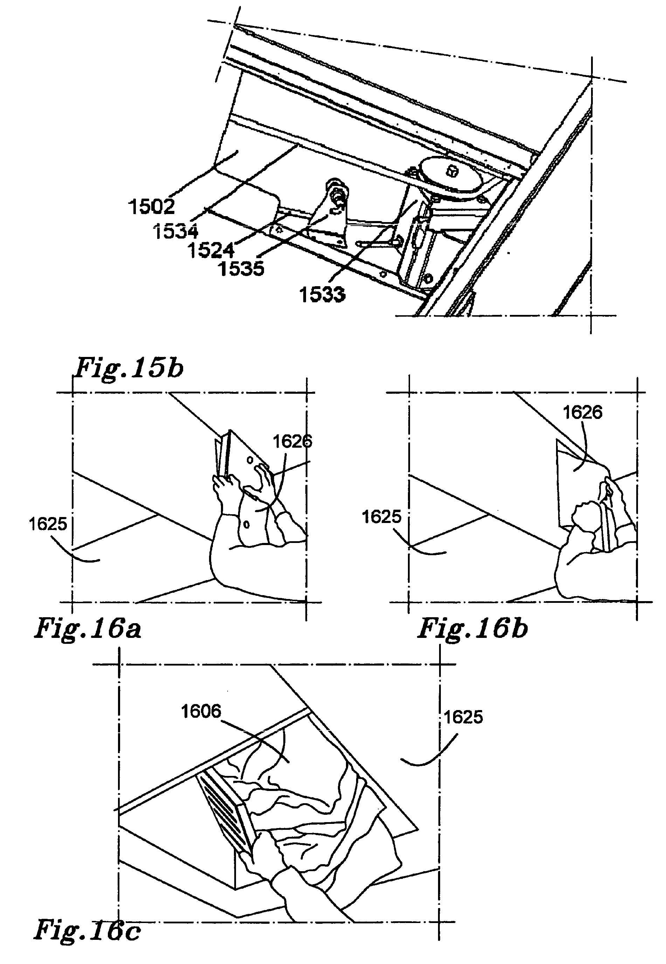

The rotary heat exchanger assembly 1522 comprises parts associated with the rotary heat exchanger, i.e.; rotary heat exchanger 1502 plus seals 1524, motor 1533, drive belt 1534 and speed sensor 1535, packaged in a framework 1522, figures 15a and 15b. A removable access panel 1536, as shown in figure 15a, is placed on one flow side of the rotary heat exchanger assembly 1522 so that access via the sliding door 1525 can be gained to the rotary heat exchanger's drive motor 1533, drive belt 1534 and speed sensor 1535 as seen in figure 15b for service inspection and maintenance.

Access to the unit's filters are required so that the filter can be changed when dirty or as part of scheduled maintenance. Traditional units offer designs which allow for the filter to be changed from the underneath (when considering a ceiling void unit) or from the side. Both these variations can be limiting. To take the filter from underneath can be difficult when a ceiling tile framework or when other services (i.e. water piping, electrical, sprinkler systems, lighting) are installed under the unit. Removing the filter from the side can also be difficult when the unit is placed close to a wall or when other services (i.e. water piping, electrical, sprinkler systems, lighting) are placed to the side of the unit. One embodiment of the invention enables filter removal from two alternatives; from underneath (considering a ceiling mounted unit) and from the side. Removable filter access panels 1626, as shown on one side of the unit in figure 16a, are set into the side of the unit to provide an alternative access point for filter 1606 replacement should access through the sliding doors 1625 be difficult due to some obstruction, for example; ceiling tile framework, lighting or other service fixtures being placed in the space under the unit.

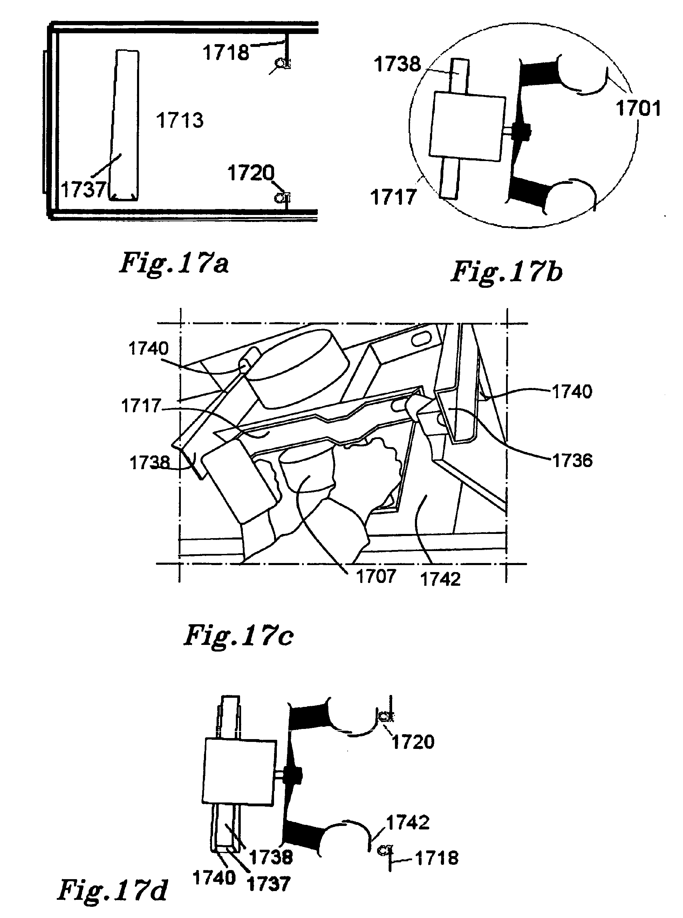

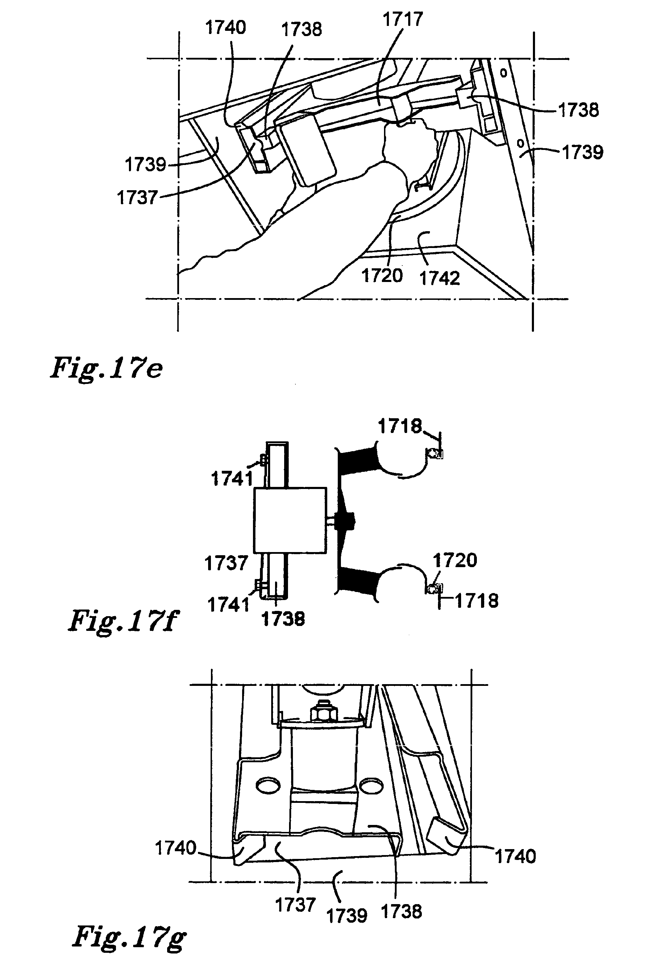

Occasionally a fan will fail or will require maintenance. Should this be the case then the fan would need to be removed from the unit. For a traditional AHU with larger fans, weighing several kg, this would be a difficult task and could be potentially dangerous when the fan needs to be held with one hand whilst mounting fixtures are secured with the other. An embodiment of the invention provides a fan assembly design that allows for ease of removal and replacement in a safe manner. To ease the serviceability of the fan assembly 1717, fan guide rails 1737 and 1738, as shown in figures 17a to 17f are employed that allow the fans to be easily removed and replaced. The fan guide rail assembly consists of two guide sets per fan assembly. Each pair of guide set assemblies are comprised of a female fan guide rail 1737 and a male fan guide rail 1738. The female fan guide rail 1737 is mounted on the fan enclosure's side walls 1739, figure 17e and 17g, whilst the male fan guide rail 1738 is an integral part of the fan assembly 1717.

To mount the fan assembly 1717 into the fan enclosure 1713 figure 17a, the male fan guide rails 1738 are placed into the female guide rails 1737 at each side of the fan assembly 1717. The fan assembly is then guided into position as the fan is pushed into the unit as shown in figure 17b and 17c. Until the male fan guide rail has passed the highest point of the fan retaining tab 1740 the fan assembly is held at a slight angle from the fan wall 1718, as shown in figure 17d, so as to avoid snagging and potential damage on the seal 1720. Once passed the fan retaining tab 1740 the fan assembly 1717 is pushed inwards slightly and lowered into the correct position resting in the fan retaining tab 1740, figures 17f and 17g. In this position the fan assembly is now in the correct position relative to the fan inlet and the fan assembly can be released without the risk of the fan assembly falling if the unit is either in the ceiling mounted or vertical wall mounted positions. The fan assembly retaining nuts 1741, figure 17f, tighten through the female fan guide rail 1717 to push the male guide plate and connected fan assembly 1737, towards the fan wall 1718 and creating a good seal between the fan seal 1720 and the fan inlet sealing plane 1742 shown in figure 17d which is an integral part of the fan assembly 1717. The functionality of this fan mounting embodiment is the same whether the fan inlet seal 1720 is mounted on the fan inlet 1701 or on the fan wall 1718. Fan removal is the reverse procedure of fan assembly.

From the disclosure above it can be concluded that the low profiled AHU of the invention will typically provide a balanced decentralised ventilation solution to a local area within a building with its installation being in a tight space, typically in the ceiling void or partitioned wall spaces, which would bring the unit in to close proximity to occupied spaces.

The above mentioned and described embodiments are only given as examples and should not be limiting to the present invention. Other solutions, uses, objectives, and functions within the scope of the invention as claimed in the below described patent claims should be apparent for the person skilled in the art. Furthermore, it should be noted that the word "comprising" does not exclude the presence of other elements or steps than those listed and the words "a" or "an" preceding an element do not exclude the presence of a plurality of such elements.

## Claims

1. A low profile air handling unit (400) enclosed in a casing (403) comprising at least one rotary heat exchanger (402) having one or more center areas (r) for air flow, air inlets (404', 404"), air outlets (405', 405"), air filters (406', 406"), access doors (1425, 1626), fan enclosures (413', 413"), fan walls (818) and centrifugal plenum fans (407', 407") with fan inlets (401', 401") having centre lines (q) and inlet opening diameters (d), said plenum fans (407', 407") producing an air flow through the air handling unit, wherein said at least one rotary heat exchanger (402) is tilted at an angle of between 9° to 30° to the air flow direction through the unit and wherein a flow straightening structure (408', 408") is placed at the inlet (401', 401") of each of the fans (407', 407"), whereby the air enters the air handling unit at the respective inlet (404', 404"), passes through the respective air fiiier (406', 406") then through the respective filter plenum (411', 411") and to the rotary heat exchanger (402), and whereby upon exiting the rotary heat exchanger (402) the air passes through the respective inlet plenum (412', 412"), through the respective flow straightening structure (408', 408") to the inlet (401', 401") of the respective fan (40T, 407"), through the respective fan enclosure (413', 413") and exits the air handling unit at the respective outlet (405', 405").

2. The low profile air handling unit according to claim 1, wherein the at least one rotary heat exchanger (402) is tilted at an angle of between 9 to 24° to the air flow direction through the unit.

3. The low profile air handling unit according to claim 1, wherein the at least one rotary heat exchanger (402) is tilted at an angle of between 9 to 18° to the air flow direction through the unit.

4. The low profile air handling unit according to claim 1, wherein the flow straightening structure (408) has a honeycomb cell structure.

5. The low profile air handling unit according to claim 4, wherein the honeycomb cell structure has a hydraulic diameter ($D_{cell}$) from 2 to 20mm and a cell length (T) of 2 to $30 \ast D_{cell}$, the maximum length of the cell length being 0.2 x fan diameter or 100mm whichever is the shortest.

6. The low profile air handling unit according to claim 1, wherein the fan inlet diameter (d) is at least 0.92 times the centrifugal plenum fan diameter.

7. The low profile air handling unit according to claim 1, wherein an outer region of the fan inlet (401) has a conic shape (721), such that the inside wall of said conic shaped fan inlet (721) forms an angle $\varphi$ of between 30 to 45° to the fans centerline (q).

8. The low profile air handling unit according to claim 7, wherein the flow straightening structure (708) is arranged at the conic shaped fan inlet (721).

9. The low profile air handling unit according to claim 1, wherein a flow guiding structure (809) creates an angle ($\psi$) between 45 and 75° to the fan wall (818), at one or more sides of the flow straightening structure (808).

10. The low profile air handling unit according to claim 1, wherein the plenum fans (907) are placed so that the centre lines (q) of the fan inlets (901) are substantially vertically and horizontally aligned with the air flow through the respective centre areas (r) of the rotary heat exchanger (902).

11. The low profile air handling unit according to claim 1, wherein one or more sound absorbing blocks (1010) are placed adjacent to the casing (1003) and the fan wall (1018).

12. The low profile air handling unit according to claim 1, wherein the rotor in the rotary heat exchanger (402) is one of the group comprising condensation and hygroscopic rotors.

13. The low profile air handling unit according to claim 1, wherein the access doors are sliding doors (1425).

14. The low profile air handling unit according to claim 1, wherein the access doors are provided as one or more filter access doors (1626) are used to provide an alternative access route to the filter.

15. The low profile air handling unit according to claim 1, wherein one or more fan guides rails 15. The low profile air handling unit (1737) and (1738) with an integrated retaining tab (1740) are used.

16. Use of the low profile air handling unit according to claims 1-15 for installation in confined spaces within a building, providing ventilation to such a building.

**Patentansprüche**

1. Luftumschlagseinheit mit niedrigem Profil (400), die in einem Gehäuse (403) eingeschlossen ist, zumindest einen Rotationswärmetauscher (402) mit einem oder mehreren Mittelbereichen (r) für Luftstrom, Lufteinlässe (404', 404"), Luftauslässe (405', 405"), Luftfilter (406', 406"), Zugangstüren (1425, 1626), Gebläseumfassungen (413', 413"), Gebläsewände (818) und Zentrifugalverteilergebläse (407', 407") mit Gebläseeinlässen (401, 401") aufweist, die Mittellinien (q) und Einlassöffnungsdurchmesser (d) aufweisen, wobei die Verteilergebläse (407, 407") einen Luftstrom durch die Luftumschlagseinheit erzeugen, wobei der zumindest eine Rotationswärmetauscher (402) bei einem Winkel zwischen 9° bis 30° zu der Luftstromrichtung durch die Einheit geneigt ist und wobei ein Aufbau zum Strom-Geradeausrichten (408', 408") an dem Einlass (401', 401") jedes der Gebläse (407', 407") platziert ist, wodurch die Luft in die Luftumschlagseinheit an dem jeweiligen Einlass (404', 404") eintritt, durch den jeweiligen Luftfilter (406', 406"), dann durch den jeweiligen Filterverteiler (411', 411 ") und zu dem Rotationswärmetauscher (402) durchtritt und wobei die Luft beim Austreten aus dem Rotationswärmetauscher (402) durch den jeweiligen Einlassverteiler (412', 412"), durch den jeweiligen Aufbau zur Strom-Geradeausrichten (408', 408") zu dem Einlass (401', 401") des jeweiligen Gebläses (407', 407"), durch die jeweilige Gebläseumfassung (413', 413") durchtritt und aus der Luftumschlagseinheit an dem entsprechenden Auslass (405', 405") austritt.

2. Luftumschlagseinheit mit niedrigem Profil nach Anspruch 1, bei der der zumindest eine Rotationswärmetauscher (402) in einem Winkel zwischen 9 bis 24° zu der Luftstromrichtung durch die Einheit geneigt ist.

3. Luftumschlagseinheit mit niedrigem Profil nach Anspruch 1, bei der der zumindest eine Rotationswärmetauscher (402) in einem Winkel zwischen 9 bis 18° zu der Luftstromrichtung durch die Einheit geneigt ist.

4. Luftumschlagseinheit mit niedrigem Profil nach Anspruch 1, bei der der Aufbau zum Strom-Geradeausrichten (408) einen Wabenstrukturzellenaufbau aufweist.

5. Luftumschlagseinheit mit niedrigem Profil nach Anspruch 4, bei der der Wabenstrukturzellenaufbau einen hydraulischen Durchmesser ($D_{cell}$) von 2 bis 20 mm und eine Zelllänge (T) von 2 bis 30 x $D_{cell}$ aufweist, wobei die Maximallänge der Zelllänge 0,2 x Gebläsedurchmesser oder 100 mm beträgt, welche auch immer die kürzeste ist.

6. Luftumschlagseinheit mit niedrigem Profil nach Anspruch 1, bei der der Gebläseeinlassdurchmesser (d) zumindest 0,92 mal der Durchmesser des Zentrifugalverteilergebläses ist.

7. Luftumschlagseinheit mit niedrigem Profil nach Anspruch 1, bei der ein Außenabschnitt des Gebläseeinlasses (401) eine konische Form (721) aufweist, sodass die Innenwand des konisch geformten Gebläseeinlasses (721) einen Winkel φ zwischen 30 bis 45° zu der Mittellinie des Gebläses (q) ausbildet.

8. Luftumschlagseinheit mit niedrigem Profil nach Anspruch 7, bei der der Aufbau zum Strom-Geradeausrichten (708) an dem konisch geformten Gebläseeinlass (721) angeordnet ist.

9.  Luftumschlagseinheit mit niedrigem Profil nach Anspruch 1, bei der ein Stromführungsaufbau (809) einen Winkel (ψ) zwischen 45 und 75° zu der Gebläsewand (818) erzeugt, an einer oder mehreren Seiten des Aufbaus zum Strom-Geradeausrichten (808).

10. Luftumschlagseinheit mit niedrigem Profil nach Anspruch 1, bei der die Verteilergebläse (901) derart platziert sind, sodass die Mittellinien (q) der Gebläseeinlässe (901) im Wesentlichen vertikal und horizontal mit dem Luftstrom durch die jeweiligen Mittelbereiche (r) des Rotationswärmetauschers (902) ausgerichtet sind.

11. Luftumschlagseinheit mit niedrigem Profil nach Anspruch 1, bei der ein oder mehrere geräuschabsorbierende Blöcke (1010) angrenzend an das Gehäuse (1003) und die Gebläsewand (1018) angeordnet sind.

12. Luftumschlagseinheit mit niedrigem Profil nach Anspruch 1, bei der der Rotor in dem Rotationswärmetauscher (402) ein Element aus der Gruppe bestehend aus Kondensations- und hygroskopischen Rotoren ist.

13. Luftumschlagseinheit mit niedrigem Profil nach Anspruch 1, bei der die Zugangstüren Gleittüren (1425) sind.

14. Luftumschlagseinheit mit niedrigem Profil nach Anspruch 1, bei der die Zugangstüren als eine oder mehrere Filterzugangstüren (1626) vorgesehen sind, verwendet werden, um einen alternativen Zugangsweg zu dem Filter vorzusehen.

15. Luftumschlagseinheit mit niedrigem Profil nach Anspruch 1, bei der eine oder mehrere Gebläseführungsschienen (1737) und (1738) mit einer integrierten Rückhaltelasche (1740) verwendet werden.

16. Verwendung der Luftumschlagseinheit mit niedrigem Profil nach Ansprüchen 1 bis 15 zur Installation in begrenzten Räumen innerhalb eines Gebäudes zum Versehen solch eines Gebäudes mit Ventilation.

## Revendications

1.  Unité de traitement de l'air extra-plate (400) renfermée dans un boîtier (403) comprenant au moins un échangeur de chaleur rotatif (402) ayant une ou plusieurs régions centrales (r) pour l'écoulement d'air, des entrées d'air (404', 404"), des sorties d'air (405', 405"), des filtres à air (406', 406"), des portes d'accès (1425, 1626), des enceintes de ventilateurs (413', 413"), des parois de ventilateur (818) et des ventilateurs de répartition centrifuge (407', 407") avec des entrées de ventilateurs (401', 401") ayant des axes centraux (q) et des diamètres d'ouverture d'entrée (d), lesdits ventilateurs de répartition (407', 407") produisant un écoulement d'air dans l'unité de traitement de l'air, dans laquelle ledit au moins un échangeur de chaleur rotatif (402) est incliné en formant un angle de 9° à 30° avec la direction d'écoulement de l'air dans l'unité et dans laquelle une structure de redressement de l'écoulement (408', 408") est placée à l'entrée (401', 401") de chacun des ventilateurs (407', 407"), moyennant quoi l'air entre dans l'unité de traitement de l'air par l'entrée respective (404', 404"), passe à travers le filtre à air respectif (406', 406") puis à travers la chambre de répartition de filtre respective (411', 411") et atteint l'échangeur de chaleur rotatif (402), et où après être sorti de l'échangeur de chaleur rotatif (402), l'air traverse la chambre de répartition d'entrée respective (412', 412"), la structure de redressement de l'écoulement respective (408', 408") puis atteint l'entrée (401', 401") du ventilateur respectif (407', 407"), traverse l'enceinte de ventilateur respective (413', 413") puis sort de l'unité de traitement de l'air par la sortie respective (405', 405").

2.  Unité de traitement de l'air extra-plate selon la revendication 1, dans laquelle ledit au moins un échangeur de chaleur rotatif (402) est incliné en formant un angle de 9° à 24° avec la direction d'écoulement de l'air dans l'unité.

3.  Unité de traitement de l'air extra-plate selon la revendication 1, dans laquelle ledit au moins un échangeur de chaleur rotatif (402) est incliné en formant un angle de 9° à 18° avec la direction d'écoulement de l'air dans l'unité.

4.  Unité de traitement de l'air extra-plate selon la revendication 1, dans laquelle la structure de redressement de l'écoulement (408) a une structure en nid d'abeilles.

5.  Unité de traitement de l'air extra-plate selon la revendication 4, dans laquelle la structure en nid d'abeilles a un diamètre hydraulique ($D_{cell}$) de 2 à 20 mm et une longueur de cellule (T) de 2 à $30*D_{cell}$, la longueur maximale de la cellule étant égale à 0,2 x le diamètre du ventilateur ou 100 mm, quelle que soit la plus petite des deux valeurs.

6. Unité de traitement de l'air extra-plate selon la revendication 1, dans laquelle le diamètre d'entrée de ventilateur (d) vaut au moins 0,92 fois le diamètre du ventilateur de répartition centrifuge.

7. Unité de traitement de l'air extra-plate selon la revendication 1, dans laquelle une région extérieure de l'entrée de ventilateur (401) a une forme conique (721), de sorte que la paroi intérieure de ladite entrée de ventilateur de forme conique (721) forme un angle φ de 30° à 45° avec l'axe central du ventilateur (q).

8. Unité de traitement de l'air extra-plate selon la revendication 7, dans laquelle la structure de redressement de l'écoulement (708) est placée au niveau de l'entrée de ventilateur de forme conique (721).

9. Unité de traitement de l'air extra-plate selon la revendication 1, dans laquelle une structure de guidage d'écoulement (809) créée un angle (ψ) de 45° à 75° avec la paroi de ventilateur (818), sur un ou plusieurs côtés de la structure de redressement de l'écoulement (808).

10. Unité de traitement de l'air extra-plate selon la revendication 1, dans laquelle les ventilateurs de répartition (907) sont placés de telle manière que les axes centraux (q) des entrées de ventilateurs (901) sont substantiellement alignés verticalement et horizontalement avec l'écoulement d'air traversant les régions centrales respectives (r) de l'échangeur de chaleur rotatif (902).

11. Unité de traitement de l'air extra-plate selon la revendication 1, dans laquelle un ou plusieurs blocs absorbants acoustiques (1010) sont placés en position adjacente au boîtier (1003) et à la paroi de ventilateur (1018).

12. Unité de traitement de l'air extra-plate selon la revendication 1, dans laquelle le rotor de l'échangeur de chaleur rotatif (402) est choisi dans le groupe comprenant les rotors de condensation et les rotors hygroscopiques.

13. Unité de traitement de l'air extra-plate selon la revendication 1, dans laquelle les portes d'accès sont des portes coulissantes (1425).

14. Unité de traitement de l'air extra-plate selon la revendication 1, dans laquelle les portes d'accès se présentent sous la forme d'une ou de plusieurs portes d'accès à un filtre (1626) qui sont utilisées pour fournir un autre chemin d'accès au filtre.

15. Unité de traitement de l'air extra-plate selon la revendication 1, dans laquelle un ou plusieurs rails de guidage de ventilateur (1737) et (1738) ayant une patte de retenue intégrée (1740) sont utilisés.

16. Utilisation de l'unité de traitement de l'air extra-plate selon les revendications 1 à 15 pour une installation dans des espaces confinés à l'intérieur d'un bâtiment, fournissant une ventilation à ce bâtiment.

**Fig.1a**

**Fig.1b**

**Fig.1c**

**Fig.2a**

**Fig.2b**

*Fig.3*

**Fig.4a**

**Fig.4b**

**Fig.4c**

**Fig.4d**

*Fig.5a*

EP 2 382 425 B1

*Fig.5b*

EP 2 382 425 B1

**Fig.6a**

**Fig.6b**

*Fig.6c*

*Fig.7a*          *Fig.7b*          *Fig.7c*

**Fig.7d**

**Fig.7e**

807

(i)

(ii)
821
801

808

**Fig.8a**

808  812

B

B

803

**Fig.8b**

808  812

803

**Fig.8c**

*Fig.8d*

EP 2 382 425 B1

**Fig.9a**

**Fig.9b**

1013 1010 1018 1008 1003

1007

B

B

1007

1013

1008 1018 1010

*Fig.10a*

1013 1018 1008

1007 1003

*Fig.10b*

*Fig.10c*

*Fig.10d*

Fig.11

*Fig.12a*

*Fig.12b*

**Fig.13a**

**Fig.13b**

*Fig.14a*

*Fig.14b*

**Fig.14c**

**Fig.15a**

**Fig.15b**

1502
1534
1524
1535
1533

1626
1625

**Fig.16a**

1626
1625

**Fig.16b**

1606
1625

**Fig.16c**

Fig.17a

Fig.17b

Fig.17c

Fig.17d

*Fig.17e*

*Fig.17f*

*Fig.17g*

**EP 2 382 425 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4727931 A